# EUROPEAN PATENT APPLICATION

(11) **EP 2 958 182 A1**
(43) Date of publication of application: **23.12.2015**
(21) Application number: 14751500.1
(22) Date of filing: 03.02.2014
(51) Int. Cl.: H01M 10/0567, H01M 10/05, H01M 10/0568, H01M 10/0569

(54) **NONAQUEOUS ELECTROLYTE SOLUTION FOR SECONDARY BATTERIES AND NONAQUEOUS ELECTROLYTE SECONDARY BATTERY**

(30) Priority: 12.02.2013 JP 2013024383
(71) Applicant: Showa Denko K.K., Tokyo 105-8518 (JP)
(72) Inventor: SAITO, Shunsuke, Tokyo 105-8518 (JP); AOKI, Yusuke, Tokyo 105-8518 (JP); KAWAMOTO, Takeshi, Tokyo 105-8518 (JP); NOMURA, Kiyoshi, Tokyo 105-8518 (JP); NAIJO, Shuichi, Tokyo 105-8518 (JP)
(74) Representative: Strehl Schübel-Hopf & Partner
(86) International application number: PCT/JP2014/052403
(87) International publication number: WO 2014/125946

(57) **Abstract**

[Solution] In a nonaqueous electrolyte solution for a secondary battery, comprising an electrolyte, a solvent and an additive, and in a nonaqueous electrolyte secondary battery including the nonaqueous electrolyte solution, the additive contains a compound represented by the following formula (I). In the formula (I), n represents an integer of 1 to 4, in the case of n=1, R¹ represents a halogen atom or the like, in the case of n=2, R¹ represents an alkaline earth metal atom or the like, in the case of n=3, R¹ represents a trivalent transition metal atom or the like, in the case of n=4, R¹ represents a tetravalent transition metal atom or the like, and R² represents an alkylene group of 1 to 6 carbon atoms or an alkenylene group of 2 to 6 carbon atoms. [Effect] The nonaqueous electrolyte secondary battery using the nonaqueous electrolyte solution for a secondary battery of the present invention has low-temperature characteristics of high level and has high-temperature characteristics of high level.

## Description

### Technical Field

The present invention relates to a nonaqueous electrolyte solution for a secondary battery and a nonaqueous electrolyte secondary battery, and more particularly to a nonaqueous electrolyte secondary battery having excellent charge-discharge characteristics, and a nonaqueous electrolyte solution for a secondary battery, said nonaqueous electrolyte solution being used in the nonaqueous electrolyte secondary battery.

### Background Art

Nonaqueous electrolyte secondary batteries using, as a negative electrode active substance, metallic lithium, an alloy capable of occluding or releasing lithium ions, a carbon material or the like and using, as a positive electrode material, a lithium-containing transition metal oxide represented by the formula LiMO₂ (M is a transition metal), lithium iron phosphate having an olivine structure, or the like have recently been noted as batteries having high energy densities.

As an electrolyte solution used as a nonaqueous electrolyte solution, a solution in which a lithium salt, such as LiPF₆, LiBF₄ or LiClO₄, has been dissolved as an electrolyte in an aprotic organic solvent is usually used. Examples of the aprotic solvents usually used include carbonates, such as propylene carbonate, ethylene carbonate, diethyl carbonate and ethyl methyl carbonate, γ-butyrolactone, esters, such as methyl acetate, and ethers, such as diethoxyethane.

In recent years, nonaqueous electrolyte secondary batteries have been used as power sources for portable equipments requiring high energy densities, such as cellular phones and notebook type personal computers, and as driving power sources for industrial apparatuses requiring long life, such as those for stationary energy storage and electric vehicles, and therefore, they need to be greatly improved without impairing not only continuous charge-discharge characteristics but also any of load characteristics, low-temperature characteristics, storage characteristics, etc.

Accordingly, as means to solve those problems, electrolytes obtained by combining various compounds have been proposed in addition to the above electrolytes and solvents. For example, in patent literatures 1 to 4, electrolytes containing compounds to which a cyclic -SO₃-, a cyclic -SO₄-, a cyclic -SO₂-NR- (R is an alkyl group or an alkenyl group) or the like is directly bonded are reported.

As for 1,3-propanesultone, 2-methylisothiazolidine 1,1-dioxide and an N-acylsulfonamide derivative, which are disclosed in the patent literatures 1 to 3, however, battery characteristics such as battery resistance at a low temperature of not higher than 0°C are insufficient though an effect to suppress battery expansion accompanying gas generation during storage at a high temperature in a highly charged state is observed. As for ethylene glycol sulfuric ester disclosed in the patent literature 4, gas generation during high-temperature storage is accelerated though an effect to improve characteristics such as battery resistance at a low temperature is observed. It is thought that in the case of these compounds, properties of a film formed in an electrode are insufficient to ensure battery characteristics in the wide temperature region.

### Citation List

### Patent Literature

Patent literature 1: Japanese Patent No. 3978881
Patent literature 2: Japanese Patent No. 5066807
Patent literature 3: Japanese Patent Laid-Open Publication No. 2010-90068
Patent literature 4: Japanese Patent No. 3760540

### Summary of Invention

### Technical Problem

As described above, in order to improve charge-discharge efficiency of nonaqueous electrolyte secondary batteries such as lithium ion battery, various additives, solvents and electrolytes have been proposed, but they are insufficient to improve battery characteristics over a range from a low temperature to a high temperature.

It is an object of the present invention to obtain a nonaqueous electrolyte solution capable of improving battery characteristics of a nonaqueous electrolyte secondary battery over a range from a low temperature to a high temperature and a nonaqueous electrolyte secondary battery using the nonaqueous electrolyte solution. In particular, it is an object of the present invention to obtain a nonaqueous electrolyte solution capable of greatly improving both battery characteristics of suppression of deformation of a battery element accompanying gas generation in the use of a nonaqueous electrolyte secondary battery at a high voltage and a high temperature and battery resistance in the use thereof at a low temperature, and a nonaqueous electrolyte secondary batter using the nonaqueous electrolyte solution.

### Solution to Problem

In order to achieve the above object, the present inventors have earnestly studied, and as a result, they have found that the problem can be solved by incorporating a specific compound into an electrolyte solution, and accomplished the present invention.

The present invention that achieves the above object is summarized as the following [1] to [13].
[1] A nonaqueous electrolyte solution for a secondary battery, which is characterized by comprising an electrolyte, a solvent and an additive, wherein the additive contains a compound represented by the following formula (I): 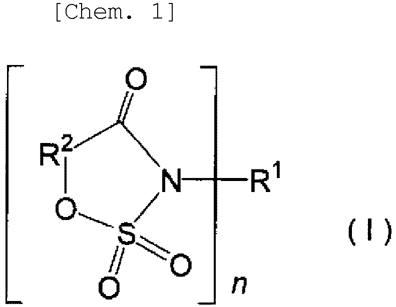 wherein n represents an integer of 1 to 4,
   in the case of n=1, R¹ represents a halogen atom, a hydrogen atom, an alkali metal atom, a monovalent transition metal atom, an alkyl group of 1 to 6 carbon atoms, an alkenyl group of 2 to 6 carbon atoms, an alkynyl group of 2 to 6 carbon atoms, a cycloalkyl group of 3 to 12 carbon atoms or an aryl group of 6 to 12 carbon atoms, the alkyl group of 1 to 6 carbon atoms may be one substituted by a halogen atom, an alkyl group or an alkenyl group, and the alkenyl group of 2 to 6 carbon atoms, the alkynyl group of 2 to 6 carbon atoms, the cycloalkyl group of 3 to 12 carbon atoms and the aryl group of 6 to 12 carbon atoms may be those substituted by a halogen atom or an alkyl group,
   in the case of n=2, R¹ represents an alkaline earth metal atom, a divalent transition metal atom, a divalent typical metal atom, an alkylene group of 1 to 6 carbon atoms, an alkenylene group of 2 to 6 carbon atoms, a cycloalkyl ring having 3 to 12 carbon atoms and 2 connectors or an aryl ring having 6 to 12 carbon atoms and2 connectors, the alkylene group of 1 to 6 carbon atoms may be one substituted by a halogen atom, an alkyl group or an alkenyl group, and the alkenylene group of 2 to 6 carbon atoms, the cycloalkyl ring having 3 to 12 carbon atoms and 2 connectors and the aryl ring having 6 to 12 carbon atoms and 2 connectors may be those substituted by a halogen atom or an alkyl group,
   in the case of n=3, R¹ represents a trivalent transition metal atom and a trivalent typical metal atom,
   in the case of n=4, R¹ represents a tetravalent transition metal atom and a tetravalent typical metal atom,
   R² represents an alkylene group of 1 to 6 carbon atoms or an alkenylene group of 2 to 6 carbon atoms, the alkylene group of 1 to 6 carbon atoms may be one substituted by a halogen atom, an alkyl group or an alkenyl group, and the alkenylene group of 2 to 6 carbon atoms may be one substituted by a halogen atom or an alkyl group.
[2] The nonaqueous electrolyte solution for a secondary battery of [1], which is characterized in that the additive contains the compound of the formula (I) wherein n is 1 or 2,
   in the case of n=1, R¹ is selected from a fluorine atom, a hydrogen atom, an alkali metal atom, and a methyl group, an ethyl group, a propyl group, a vinyl group, an allyl group, a propargyl group, a tert-butyl group and a phenyl group which may be each substituted by a fluorine atom, in the case of n=2, R¹ is at least one kind selected from an alkaline earth metal atom, a zinc atom, an ethylene group, a vinylene group, a n-propylene group and a phenylene group, and
   R² is at least one kind selected from an alkylene group of 1 to 2 carbon atoms which may be substituted by a fluorine atom or an alkyl group and an alkenylene group of 2 to 3 carbon atoms which may be substituted by a fluorine atom or an alkyl group.
[3] The nonaqueous electrolyte solution for a secondary battery of [1] or [2], which is characterized in that the compound represented by the formula (I) is at least one kind selected from the group consisting of 6-methyl-3, 4-dihydro-1, 2, 3-oxathiazin-4-one 2,2-dioxide lithium, 6-methyl-3,4-dihydro-1,2,3-oxathiazin-4-one 2,2-dioxide, 3,6-dimethyl-3,4-dihydro-1,2,3-oxathiazin-4-one 2,2-dioxide, and 5-fluoro-6-methyl-1,2,3-oxathiazin-4-one 2,2-dioxide lithium.
[4] The nonaqueous electrolyte solution for a secondary battery of any one of [1] to [3], which is characterized in that the content of the compound represented by the formula (I) is 0.05 to 10 parts by mass based on 100 parts by mass of the total of the solvent.
[5] The nonaqueous electrolyte solution for a secondary battery of [1], which is characterized by further comprising, as an additive, a compound represented by the following formula (II): 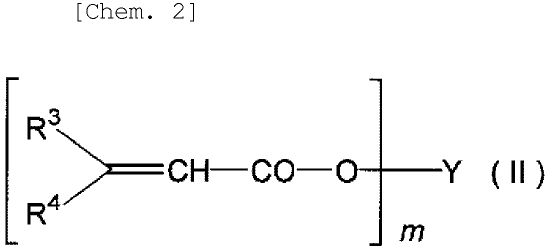 wherein R³ and R⁴ are each independently a hydrogen atom, a methyl group or an amino group, m is 1 to 4, when m is 1, Y is a hydrogen atom or a monovalent organic group, when m is 2, Y is a divalent organic group, when m is 3, Y is a trivalent organic group, and when m is 4, Y is a tetravalent organic group.
[6] The nonaqueous electrolyte solution for a secondary battery of [5], which is characterized in that when m is 1 or 2 and Y is monovalent in the compound represented by the formula (II), Y is an alkyl group of 1 to 6 carbon atoms or has a structure wherein one hydrogen atom in the alkyl group has been replaced with an isocyanato group, and when m is 1 or 2 and Y is divalent in the above compound, Y is an alkylene group of 1 to 6 carbon atoms or has a structure wherein one hydrogen atom in the alkylene group has been replaced with an isocyanato group.
[7] The nonaqueous electrolyte solution for a secondary battery of [5], which is characterized in that the compound represented by the formula (II) is at least one kind selected from the group consisting of 1,1-bis(acryloyloxymethyl)ethyl isocyanate, N,N'-bis(acryloyloxyethyl)urea, 2,2-bis(acryloyloxymethyl)ethyl isocyanate diethylene oxide, 2,2-bis(acryloyloxymethyl)ethyl isocyanate triethylene oxide, tetrakis(acryloyloxymethyl)urea, 2-acryloyloxyethyl isocyanate, methyl crotonate, ethyl crotonate, methyl aminocrotonate, ethyl aminocrotonate and vinyl crotonate.
[8] The nonaqueous electrolyte solution for a secondary battery of any one of [5] to [7], wherein the content of the compound characterized by formula (II) is 0.05 to 10 parts by mass based on 100 parts by mass of the total of the solvent.
[9] The nonaqueous electrolyte solution for a secondary battery of [1], which is characterized in that the electrolyte is at least one kind selected from lithium hexafluorophosphate and lithium tetrafluoroborate.
[10] The nonaqueous electrolyte solution for a secondarybattery of [1], which further comprises a cyclic carbonic ester of an unsaturated compound.
[11] The nonaqueous electrolyte solution for a secondarybattery of [1], which further comprises, as an additive, at least one kind selected from methyl difluoroacetate, 1,3-propanesultone, 1,4-butanesultone, 4-fluoro-1,3-dioxolan-2-one, 4,5-difluoro-1,3-dioxolan-2-one, lithium fluorododecaborate represented by the formula Li₂B₁₂F_{X}Z_{12-X} (wherein X is an integer of 8 to 12, and Z is H, Cl or Br), lithium bis (oxalate) borate, lithium difluorooxalatoborate, lithium bis (trifluoromethane sulfonyl) imide, lithium bis(fluorosulfonyl)imide, cyclohexylbenzene, tert-pentylbenzene, succinonitrile and adiponitrile.
[12] The nonaqueous electrolyte solution for a secondary battery of [1], which is characterized in that the solvent contains at least one kind selected from the group consisting of cyclic carbonates and chain carbonates.
[13] A nonaqueous electrolyte secondary battery which is characterized by including a positive electrode, a negative electrode and the nonaqueous electrolyte solution for a secondary battery of any one of [1] to [12].

### Advantageous Effects of Invention

The nonaqueous electrolyte solution of the present invention contains a prescribed amount of the aforesaid additive, and therefore, it can improve charge-discharge characteristics of a nonaqueous electrolyte secondary battery.

Further, the nonaqueous electrolyte solution of the present invention contains a prescribed amount of a compound having an N-acylsulfonic ester amide structure represented by the following formula (I), and therefore, it can remarkably improve charge-discharge characteristics of a nonaqueous electrolyte secondary battery.

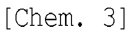

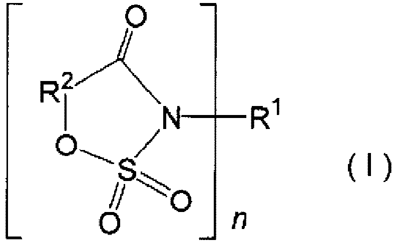

In the formula (I), R¹, R² and n are as previously described.

That is to say, the nonaqueous electrolyte solution of the present invention can improve thermal stability of a nonaqueous electrolyte secondary battery at a high temperature and charge-discharge performance thereof at a low temperature. Particularly in the nonaqueous electrolyte solution of the present invention, gas generation caused by decomposition of an electrolyte solution can be prevented while suppressing high resistance of battery resistance at a low temperature of not higher than 0°C, and as a result, deterioration of a nonaqueous electrolyte secondary battery can be prevented.

### Description of Embodiments

### <Nonaqueous electrolyte solution for secondary battery>

The nonaqueous electrolyte solution for a secondary battery according to the present invention comprises an electrolyte, a solvent and an additive.

### <Additive>

In the present invention, the "additive" is a substance added in an amount of not more than 10 parts by mass, per kind of additive, when the total of the solvent to constitute the electrolyte solution of the present invention is 100 parts by mass. If a small amount of a solvent component is present in a solvent and if the amount of the solvent component of a small amount added is less than 10 parts by mass based on 100 parts by mass of the total amount of the solvent excluding the solvent component of a small amount, the solvent component of a small amount is regarded as an additive and is excluded from the solvent. Here, in the case where two or more kinds of solvent components of small amounts are present and one solvent component (i) of a small amount among them is regarded as an additive in accordance with the above definition, a solvent component in an amount identical with or smaller than that of the solvent component (i) is also regarded as an additive.

The additive in the nonaqueous electrolyte solution for a secondary battery of the present invention contains a compound having a cyclic amide structure represented by the following formula (I) and composed of an N-acylsulfonic ester.

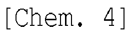

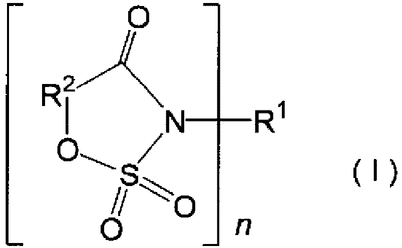

In the formula (I), n represents an integer of 1 to 4.

In the case of n=1, R¹ represents a halogen atom, a hydrogen atom, an alkali metal atom, a monovalent transition metal atom, an alkyl group of 1 to 6 carbon atoms, an alkenyl group of 2 to 6 carbon atoms, an alkynyl group of 2 to 6 carbon atoms, a cycloalkyl group of 3 to 12 carbon atoms or an aryl group of 6 to 12 carbon atoms, the alkyl group of 1 to 6 carbon atoms may be one substituted by a halogen atom, an alkyl group or an alkenyl group, and the alkenyl group of 2 to 6 carbon atoms, the alkynyl group of 2 to 6 carbon atoms, the cycloalkyl group of 3 to 12 carbon atoms and the aryl group of 6 to 12 carbon atoms may be those substituted by a halogen atom or an alkyl group.

In the case of n=2, R¹ represents an alkaline earth metal atom, a divalent transition metal atom, a divalent typical metal atom, an alkylene group of 1 to 6 carbon atoms, an alkenylene group of 2 to 6 carbon atoms, a cycloalkyl ring having 3 to 12 carbon atoms and 2 connectors or an aryl ring having 6 to 12 carbon atoms and 2 connectors, the alkylene group of 1 to 6 carbon atoms may be one substituted by a halogen atom, an alkyl group or an alkenyl group, and the alkenylene group of 2 to 6 carbon atoms, the cycloalkyl ring having 3 to 12 carbon atoms and 2 connectors and the aryl ring having 6 to 12 carbon atoms and 2 connectors may be those substituted by a halogen atom or an alkyl group.

In the case of n=3, R¹ represents a trivalent transition metal atom and a trivalent typical metal atom.

In the case of n=4, R¹ represents a tetravalent transition metal atom and a tetravalent typical metal atom.

R² represents an alkylene group of 1 to 6 carbon atoms or an alkenylene group of 2 to 6 carbon atoms, the alkylene group of 1 to 6 carbon atoms may be one substituted by a halogen atom, an alkyl group or an alkenyl group, and the alkenylene group of 2 to 6 carbon atoms may be one substituted by a halogen atom or an alkyl group.

The compound represented by the formula (I) is preferably one wherein
in the case of n=1, R¹ is selected from a fluorine atom, a hydrogen atom, an alkali metal atom, and a methyl group, an ethyl group, a propyl group, a vinyl group, an allyl group, a propargyl group, a tert-butyl group and a phenyl group which may be each substituted by a fluorine atom, in the case of n=2, R¹ is at least one kind selected from an alkaline earth metal atom, a zinc atom, an ethylene group, a vinylene group, a n-propylene group and a phenylene group, and
R² is at least one kind selected from an alkylene group of 1 to 2 carbon atoms which may be substituted by a fluorine atom or an alkyl group and an alkenylene group of 2 to 3 carbon atoms which may be substituted by a fluorine atom or an alkyl group.

In the case of n=3 and in the case of n=4, R¹ is preferably a transition metal atom.

Examples of the transition metal atoms include Ti, V, Cr, Mn, Fe, Co, Ni, Zn, Pd, W, Nb, Y and Mo, and of these, preferable are V(III), Ti(IV), Zn(II), NI(II), Cr(III), etc.

In the formula (I), n is selected according to a valence of A, and in the case of, for example, a divalent metal atom or a divalent group, n becomes 2, and in this case, plural R² may be the same as or different from each other.

The additive desirably contains a compound of the above formula (I) wherein n is 1 or 2.

By using a compound represented by the formula (I) in the additive, the additive partially undergoes reductive decomposition on a negative electrode during initial charging, in a secondary battery using the nonaqueous electrolyte solution for a secondary battery of the present invention, whereby a protective film having preferred ionic conductivity is formed on surfaces of positive and negative electrodes. As a result, charge-discharge characteristics over a range from a low temperature of about -30°C to a high temperature of about 85°C are enhanced. Examples of specific compounds represented by the formula (I) include 6-methyl-3,4-dihydro-1,2,3-oxathiazin-4-one 2,2-dioxide lithium, 6-methyl-3,4-dihydro-1,2,3-oxathiazin-4-one 2,2-dioxide, 3,6-dimethyl-3,4-dihydro-1,2,3-oxathiazin-4-one 2,2-dioxide, 3-ethyl-6-methyl-3,4-dihydro-1,2,3-oxathiazin-4-one 2,2-dioxide, 3-propyl-6-methyl-3,4-dihydro-1,2,3-oxathiazin-4-one 2,2-dioxide, 3-butyl-6-methyl-3,4-dihydro-1,2,3-oxathiazin-4-one 2,2-dioxide, 3-tert-butyl-6-methyl-3,4-dihydro-1,2,3-oxathiazin-4-one 2,2-dioxide, 3-cyclohexyl-6-methyl-3,4-dihydro-1,2,3-oxathiazin-4-one 2,2-dioxide, 3-phenyl-6-methyl-3,4-dihydro-1,2,3-oxathiazin-4-one 2,2-dioxide, 3-hydroxy-6-methyl-3,4-dihydro-1,2,3-oxathiazin-4-one2,2-dioxide lithium, 3-fluoro-6-methyl-3,4-dihydro-1,2,3-oxathiazin-4-one 2,2-dioxide, 3,4-dihydro-1,2,3-oxathiazin-4-one 2,2-dioxide, 3,4-dihydro-1,2,3-oxathiazin-4-one 2,2-dioxide, 1,2,3-oxathiazin-4-one 2,2-dioxide, 5-fluoro-1,2,3-oxathiazin-4-one 2,2-dioxide, 5-fluoro-1,2,3-oxathiazin-4-one 2,2-dioxide lithium, 5-fluoro-6-methyl-1,2,3-oxathiazin-4-one 2,2-dioxide, 5-fluoro-3-methyl-1,2,3-oxathiazin-4-one 2,2-dioxide, bis(6-methyl-3,4-dihydro-1,2,3-oxathiazin-4-one 2,2-dioxide)calcium, and bis(6-methyl-3,4-dihydro-1,2,3-oxathiazin-4-one 2,2-dioxide)zinc. Of these compounds, preferable are 6-methyl-3,4-dihydro-1,2,3-oxathiazin-4-one 2,2-dioxide lithium, 6-methyl-3,4-dihydro-1,2,3-oxathiazin-4-one 2,2-dioxide, 3,6-dimethyl-3,4-dihydro-1,2,3-oxathiazin-4-one 2,2-dioxide, 3-cyclohexyl-6-methyl-3,4-dihydro-1,2,3-oxathiazin-4-one 2,2-dioxide, 3-fluoro-6-methyl-3,4-dihydro-1,2,3-oxathiazin-4-one 2,2-dioxide, 3,4-dihydro-1,2,3-oxathiazin-4-one 2,2-dioxide, 3,4-dihydro-1,2,3-oxathiazin-4-one 2,2-dioxide, 1,2,3-oxathiazin-4-one 2,2-dioxide, 5-fluoro-1,2,3-oxathiazin-4-one 2,2-dioxide, 5-fluoro-1,2,3-oxathiazin-4-one 2,2-dioxide lithium, 5-fluoro-6-methyl-1,2,3-oxathiazin-4-one 2,2-dioxide, and 5-fluoro-3-methyl-1,2,3-oxathiazin-4-one 2,2-dioxide. More preferable are 6-methyl-3,4-dihydro-1,2,3-oxathiazin-4-one 2,2-dioxide lithium, 6-methyl-3,4-dihydro-1,2,3-oxathiazin-4-one 2,2-dioxide, 3,6-dimethyl-3,4-dihydro-1,2,3-oxathiazin-4-one 2,2-dioxide, and 5-fluoro-6-methyl-1,2,3-oxathiazin-4-one 2,2-dioxide.

In the present invention, it is also possible to use an additive represented by the formula (II) together with the additive represented by the formula (I).

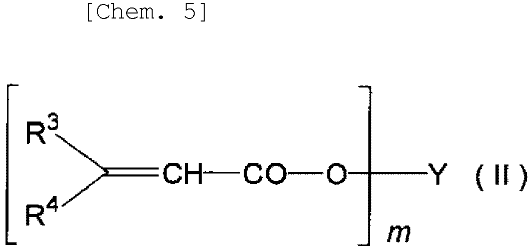

In the formula (II), R³ and R⁴ are each independently a hydrogen atom, a methyl group or an amino group, and m is 1 to 4.

In the above formula (II), when m is 1, Y is a hydrogen atom or a monovalent organic group. Examples of the monovalent organic groups include an allyl group, an alkyl group of 1 to 6 carbon atoms, an isocyanato group, an amino group, an imide group, an amide group, a vinyl group, a benzoyl group, an acyl group, an anthranyloyl group, an glycoloyl group, and groups wherein these groups are combined. Of such compounds, preferable is a compound in which Y is an alkyl group of 1 to 6 carbon atoms or has a structure wherein one hydrogen atom in the alkyl group has been replaced with an isocyanato group. The alkyl group may be one containing an ether linkage.

When m is 2, Y is a divalent organic group. Examples of the divalent organic groups include a phenylene group, an alkylene group, a polymethylene group, a urea group and a malonyl group. Y may be a group formed by replacing a hydrogen atom in the alkylene group or the polymethylene group with any of groups given as examples of the above monovalent organic groups other than the alkyl group of 1 to 6 carbon atoms. Of such compounds, preferable is a compound in which Y is an alkylene group of 1 to 6 carbon atoms or has a structure wherein one hydrogen atom in the alkylene group has been replaced with an isocyanato group.

The above alkylene group may be one containing an ether linkage.

When m is 3, Y is a trivalent organic group. The trivalent organic group is, for example, a group obtained by removing 3 hydrogen atoms from an aliphatic hydrocarbon, benzene or urea. Y may be a group formedby replacing a hydrogen atomof a group obtained by removing 3 hydrogen atoms from an aliphatic hydrocarbon, with any of groups given as examples of the above monovalent organic groups other than the alkyl group of 1 to 6 carbon atoms.

When m is 4, Y is a tetravalent organic group. The tetravalent organic group is, for example, a group obtained by removing 4 hydrogen atoms from an aliphatic hydrocarbon, benzene or urea. Y may be a group formed by replacing a hydrogen atomof a group obtained by removing 4 hydrogen atoms from an aliphatic hydrocarbon, with any of groups given as examples of the above monovalent organic groups other than the alkyl group of 1 to 6 carbon atoms.

In the compound represented by the formula (II), m is preferably 1 or 2.

Specific examples of the compounds represented by the formula (II) include 1,1-bis(acryloyloxymethyl)ethyl isocyanate, N,N'-bis(acrtyloyloxyethyl)urea, 2,2-bis(acryloyloxymethyl)ethyl isocyanate diethylene oxide, 2,2-bis(acryloyloxymethyl)ethyl isocyanate triethylene oxide, tetrakis(acryloyloxymethyl)urea, 2-acryloyloxyethyl isocyanate, 2-methacryloyloxyethyl isocyanate, methyl crotonate, ethyl crotonate, methyl aminocrotonate, ethyl aminocrotonate and vinyl crotonate. Of these compounds, preferable are 1,1-bis(acryloyloxymethyl)ethyl isocyanate, 2,2-bis(acryloyloxymethyl)ethyl isocyanate triethylene oxide, tetrakis(acryloyloxymethyl)urea, 2-acryloyloxyethyl isocyanate, 2-methacryloyloxyethyl isocyanate, methyl crotonate and vinyl crotonate. More preferable are 1,1-bis(acryloyloxymethyl)ethyl isocyanate, 2-acryloyloxyethyl isocyanate and 2-methacryloyloxyethyl isocyanate.

Such a compound represented by the formula (II) is contained as an additive, and therefore, charge-discharge characteristics of a secondary battery over a range from a low temperature to a high temperature of about 60°C can be prominently enhanced.

As the additive in the nonaqueous electrolyte solution for a secondary battery of the present invention, the compounds of the above formula (I) may be used singly or may be used in combination of two or more kinds.

By using such a compound represented by the formula (II) together with the compound represented by the formula (I), decomposition of the electrolyte solution can be suppressed while suppressing a rise of resistance of films on the negative and positive electrodes.

The content of the compound represented by the formula (I) in the nonaqueous electrolyte solution for a secondary battery of the present invention (if the compound represented by the formula (II) is contained, the content means each content) is 0.05 to 10 parts by mass, preferably 0.2 to 5 parts by mass, more preferably 0.5 to 2 parts by mass, based on 100 parts by mass of the total of the solvent contained in the nonaqueous electrolyte solution for a secondary battery. When the content of each of the compounds represented by the formulas (I) and (II) is in the above range, a preferred ion-conductive protective film can be formed on a surface of a negative electrode, and as a result, charge-discharge characteristics of a secondary battery over a range from a low temperature to a high temperature can be enhanced. If the content of each of the compounds represented by the formulas (I) and (II) is small, formation of a protective film on a negative electrode is not sufficient, and sufficient charge-discharge characteristics of a secondary battery over a range from a low temperature to a high temperature are not obtained in some cases. If the content of each of the compounds represented by the formulas (I) and (II) is too large, reaction at the negative electrode proceeds excessively, and the thickness of a film formed on a surface of the negative electrode increases. Therefore, the reaction resistance of the negative electrode is increased, and there is a fear that lowering of discharge capacity of a battery or lowering of charge-discharge characteristics such as cycle performance may be rather brought about.

In the nonaqueous electrolyte solution for a secondary battery of the present invention, other additives may be contained according to a desired use within limits not detrimental to the effect of the present invention, in addition to the compounds represented by the formulas (I) and (II).

Examples of other additives include cyclic carbonic esters of unsaturated compounds, and specifically, there can be mentioned vinylene carbonate, 4,5-dimethylvinylene carbonate, 4,5-diethylvinylene carbonate, 4,5-dipropylvinylene carbonate, 4-ethyl-5-methylvinylene carbonate, 4-ethyl-5-propylvinylene carbonate, 4-methyl-5-propylvinylene carbonate, vinylethylene carbonate, divinylethylene carbonate, etc.

It is also possible to further use, as other additives, methyl difluoroacetate, 1,3-propanesultone, 1,4-butanesultone, 4-fluoro-1,3-dioxolan-2-one, 4,5-difluoro-1,3-dioxolan-2-one, lithium fluorododecaborate represented by the formula Li₂B₁₂F_{X}Z_{12-X} (wherein X is an integer of 8 to 12, and Z is H, Cl or Br), lithium bis(oxalate)borate, lithium difluorooxalatoborate, lithium bis(trifluoromethane sulfonyl)imide, lithium bis(fluorosulfonyl)imide, cyclohexylbenzene, tert-pentylbenzene, succinonitrile, adiponitrile, etc. Lithium compounds, such as lithium fluorododecaborate, lithium bis(oxalate)borate, lithium difluorooxalatoborate, lithium bis (trifluoromethane sulfonyl) imide and lithium bis(fluorosulfonyl)imide, can be also used as electrolytes.

Of these other additives, desirable are vinylene carbonate, vinylethylene carbonate, divinylethylene carbonate, 1,3-propanesultone, 4-fluoro-1,3-dioxolan-2-one, 4,5-difluoro-1,3-dioxolan-2-one, lithium fluorododecaborate, lithium bis (oxalate) borate, lithium difluorooxalatoborate, lithium bis(trifluoromethane sulfonyl)imide and lithium bis(fluorosulfonyl)imide. By the use of them, it becomes easy to enhance charge-discharge characteristics of a secondary battery over a wide temperature range from a low temperature to a high temperature.

When these other additives are used, the content of each of these other additives is not more than 5 parts by mass, more preferably not more than 2 parts by mass, based on 100 parts by mass of the total of the solvent, from the viewpoint of formation of a good film. It is preferable that the content of each of these other additives does not exceed the content of the aforesaid additive represented by the formula (I), from the viewpoint of formation of a good film.

Taking formation of a film of good conductivity into consideration, the total amount of the additives added is preferably 0.5 to 10 parts by mass, more preferably 1 to 5 parts by mass, based on 100 parts by mass of the total of the solvent. If the total amount of the additives added is smaller than 0.5 part by mass, formation of a film on a negative electrode is not sufficient, and sufficient charge-discharge characteristics are not obtained in some cases. If the total amount of the additives added is larger than 10 parts by mass, the thickness of a film formed on a surface of the negative electrode increases, and the reaction resistance of the negative electrode is increased, so that there is a fear of lowering of charge-discharge characteristics.

### <Electrolyte>

The electrolyte is appropriately selected according to the use of the nonaqueous electrolyte solution. In the case of a nonaqueous electrolyte solution used for, for example, a lithium ion secondary battery, a lithium salt is used.

As lithium salts, well-known ones can be used without any restriction, and at least one electrolyte salt selected from LiPF₆ and LiBF₄ is preferable. These electrolyte salts have high electric conductivity, and when aluminum is used for a collector of a positive electrode, solubility of aluminum in these electrolyte salts is low.

As electrolytes, further, lithium fluorododecaborate represented by the formula Li₂B₁₂F_{X}Z_{12-X} (wherein X is an integer of 8 to 12, and Z is H, Cl or Br), lithium bis (oxalate) borate, lithium difluorooxalatoborate, lithium bis (trifluoromethane sulfonyl) imide and lithium bis (fluorosulfonyl) imide which are given as examples of the aforesaid additives can be used singly or in combination with LiPF₆ and LIBF₄. By using them, resistance to high temperatures is improved, a rise of voltage is suppressed, and decomposition of the solvent or the electrode is prevented, and besides, deterioration or thermal runaway of a battery caused by overcharge can be prevented because formation of dendrite of lithium can be also suppressed.

The concentration of at least one kind selected from LiPF₆ and LIBF₄ based on the total of the electrolyte solution is preferably not less than 0.05 mol/l, more preferably not less than 0.075 mol/l but not more than 0.4 mol/l.

If the amount of at least one kind selected from LiPF₆ and LIBF₄ is too small, a protective film sufficient for an aluminum collector is not formed, and good charge-discharge characteristics are not obtained in some cases. Moreover, conductivity of the electrolyte solution is not sufficient, and good charge-discharge characteristics are not obtained in some cases.

When both of lithium fluorododecaborate or the like and at least one kind selected from LiPF₆ and LIBF₄ are used as electrolytes, the ratio (A:B) between the content A of lithium fluorododecaborate or the like and the content B of at least one kind selected from LiPF₆ and LIBF₄ is preferably 95:5 to 5:95, more preferably 85:15 to 15:85, in terms of a molar ratio.

When lithium fluorododecaborate or the like is used, the total molar concentration of the lithium fluorododecaborate or the like and at least one kind selected from LiPF₆ and LIBF₄ based on the total of the electrolyte solution is preferably 0.3 to 1.5 mol/l, more preferably 0.4 to 1.0 mol/l. When the total molar concentration is in the above range, good overcharge prevention effect and good charge-discharge characteristics can be obtained.

### <Solvent>

Although the solvent is not specifically restricted, examples of the solvents include cyclic carbonates, such as ethylene carbonate, propylene carbonate and butylene carbonate, chain carbonates, such as diethyl carbonate, dimethyl carbonate, methyl ethyl carbonate, methyl propyl carbonate, ethyl propyl carbonate and dipropyl carbonate, and fluorine-substituted cyclic or chain carbonates wherein a part of hydrogen atoms in the above carbonates have been replaced with fluorine atoms, such as trifluoropropylene carbonate, bis(trifluoroehtyl) carbonate and trifluoroethyl methyl carbonate. (However, these carbonates have no unsaturated double bond.) These solvents can be used singly or as a mixture of two or more kinds. The solvent preferably contains at least one kind selected from the group consisting of cyclic carbonates and chain carbonates from the viewpoint that good electrochemical stability and electric conductivity can be obtained. For improving battery performance also in a wide temperature range from a low temperature to a high temperature, it is preferable to use a mixed solvent of two or more kinds.

From the viewpoint of enhancement of battery performance, solvents, such as dimethoxyethane, diglime, triglime, polyethylene glycol, γ-butyrolactone, sulfolane, methyl acetate, ethyl acetate, propylacetate, methyl propionate, ethyl propionate, tetrahydrofuran, 2-methyltetrahydrofuran, 1,4-dioxane and acetonitrile, can be used as solvents other than the above carbonates. However, the solvents are not particularly limited thereto.

### <Nonaqueous electrolyte secondary battery>

The nonaqueous electrolyte secondary battery of the present invention is characterized by including a positive electrode, a negative electrode and the aforesaid nonaqueous electrolyte solution for a secondary battery. Since the nonaqueous electrolyte secondary battery of the present invention uses the nonaqueous electrolyte solution for a secondary battery of the present invention, it exhibits good charge-discharge characteristics.

The structure, etc. of the nonaqueous electrolyte secondary battery are not specifically restricted and can be appropriately selected according to a desired use. The nonaqueous electrolyte secondary battery of the present invention may further include, for example, a separator made of polyethylene or the like.

The negative electrode for use in the present invention is not specifically restricted and can include a collector, a conductive material, a negative electrode active substance, a binder and/or a thickening agent.

In the case where a lithium ion secondary battery is imagined, the constitution of the battery is described hereinafter. However, the use of the nonaqueous electrolyte solution of the present invention is not limited thereto.

As the negative electrode active substance, anymaterial capable of occluding or releasing lithium can be used without specific restriction. Typical examples of such materials include non-graphitized carbon, artificial graphite carbon, natural graphite carbon, metallic lithium, aluminum, lead, silicon, an alloy of lithium and tin or the like, tin oxide and titanium oxide. Any of these materials is kneaded with a binder, such as polytetrafluoroethylene (PTFE), polyvinylidene fluoride (PVdF) or styrene-butadiene rubber (SBR), in a conventional manner, and the kneadate can be used as a mixture. Using the mixture and a collector such as a copper foil, the negative electrode can be prepared.

The positive electrode for use in the present invention is not specifically restricted and preferably includes a collector, a conductive material, a positive electrode active substance, a binder and/or a thickening agent.

Typical examples of the positive electrode active substances include lithium composite oxides of lithium and transition metals such as cobalt, manganese and nickel, and lithium composite oxides wherein a part of lithium site or transition metal site of the above lithium composite oxides is replaced with cobalt, nickel, manganese, aluminum, boron, magnesium, iron, copper or the like. Moreover, lithium-containing transition metal phosphates having an olivine structure can be also used. Any of these substances is mixed with a conductive agent, such as acetylene black or carbon black, and a binder, such as polytetrafluoroethylene (PTFE) or polyvinylidene fluoride (PVdF), and the mixture can be used. Using the mixture and a collector such as an aluminum foil, the positive electrode can be prepared.

### [Examples]

The present invention will be described in more detail hereinafter with reference to the following examples, but the present invention is in no way limited by those examples and can be carried out by making appropriate changes as long as the gist of the present invention is not changed.

### [Example 1]

### [Preparation of electrolyte solution]

LiPF₆ was used as an electrolyte. A solvent composed of a mixture containing 30% by volume of ethylene carbonate and 70% by volume of methyl ethyl carbonate was used. In this solvent, LiPF₆ was dissolved so that the concentration might become 1.0 mol/l, and as an additive for forming an ion-conductive film on an electrode, a cyclic amide compound composed of an N-acylsulfonic ester was added. In Example 1-1, 3,6-dimethyl-3,4-dihydro-1,2,3-oxathiazin-4-one 2,2-dioxide was added,
in Example 1-2, 6-methyl-3,4-dihydro-1,2,3-oxathiazin-4-one 2,2-dioxide lithium was added,
in Example 1-3, 3-fluoro-6-methyl-3,4-dihydro-1,2,3-oxathiazin-4-one 2,2-dioxide was added,
in Example 1-4, 5-fluoro-3-methyl-1,2,3-oxathiazin-4-one 2,2-dioxide lithium was added, and
in Example 1-5, 6-methyl-3,4-dihydro-1,2,3-oxathiazin-4-one 2,2-dioxide was added, in each amount of 1.0% by weight based on 100% by weight of the total of the solvent. Thus, electrolyte solutions were obtained.

In Comparative Example 1-1, an electrolyte solution containing no additive was used.

Further, as an additive, 1,3-propanesultone was added in Comparative Example 1-2, ethylene glycol sulfuric ester was added in Comparative Example 1-3, 2-methylisothiazolidine 1,1-dioxide was added in Comparative Example 1-4, and 2-methyl-3(2H)-isothiazolone 1,1-dioxide was added in Comparative Example 1-5, in each amount of 1.0% by weight based on 100% by weight of the total of the solvent. Thus, electrolyte solutions were obtained.

### [Preparation of positive electrode]

LiCo_{1/3}Ni_{1/3}Mn_{1/3}O₂ functioning as a positive electrode active substance, a carbon material functioning as a conductive agent and an N-methyl-2-pyrrolidone solution in which polyvinylidene fluoride functioning as a binder had been dissolved were mixed so that the mass ratio between the active substance, the conductive agent and the binder might become 95:25:2.5, and thereafter, the mixture was kneaded to prepare a positive electrode slurry. The slurry prepared was applied onto an aluminum foil functioning as a collector and then dried. Thereafter, the resulting aluminum foil was rolled by the use of a rolling mill, and a collector tab was attached thereto to prepare a positive electrode.

### [Preparation of negative electrode]

Artificial graphite functioning as a negative electrode active substance, SBR functioning as a binder and carboxymethyl cellulose functioning as a thickening agent were mixed with water so that the mass ratio between the active substance, the binder and the thickening agent might become 97.5:1.5:1, and thereafter, the mixture was kneaded to prepare a negative electrode slurry. The slurry prepared was applied onto a copper foil functioning as a collector and then dried. Thereafter, the resulting copper foil was rolled by the use of a rolling mill, and a collector tab was attached thereto to prepare a negative electrode.

### [Preparation of battery]

The positive electrode and the negative electrode prepared as described above were allowed to face each other interposing a polyethylene separator between the electrodes, and they were placed in an aluminum-laminated container. In a glove box in an Ar (argon) atmosphere, the aforesaid electrolyte solution was dropped into the container containing the electrodes therein. While depressurizing, the laminated container was thermocompression bonded to prepare a battery. The capacity of this battery was 550 mAh.

### [Evaluation of battery]

### <Initial charging and discharging>

The battery prepared above was charged up to 4.2 V at 0.05C (a current at which full charging or full discharging is performed in 1/0.05 hours (= 20 hours)) and then discharged down to 3.0 V at 0.1C to obtain a discharge capacity [A].

### <Measurement of battery resistance at low temperature>

After initial charging and discharging, constant-current charging of the battery was carried out at 1C until 50% of the discharge capacity [A] was reached at 25°C, and after 50% capacity was reached, charging was finished. Thereafter, by the measurement of alternating current impedance at 0°C, a reaction resistance of the battery at a low temperature was measured.

The low-frequency side of a circular arc component of a spectrum obtained at 20 kHz to 100 mHz was extrapolated up to an X-intercept. A reaction resistance was calculated by using a difference between an X-intercept on the high-frequency side and the resulting value of the X-intercept of low-frequency side. This resistance value is set forth in Table 1.

### <Measurement of change in expansion of battery in high-temperature storage>

When 4.3 V was reached at 25°C after the measurement of battery resistance at a low temperature, charging was carried out at 1C for 3 hours in a constant-current/constant-voltage charge mode, and from a change in thickness of the battery in an environment of 85°C, an expansion ratio was measured. The thickness of the battery before storage was taken as 100%, and an expansion ratio after 24 hours was examined. The result of a change in the expansion ratio is set forth in Table 1.

**[Table 1]**

| | Solvent | Electrolyte salt | | Additive | | 0°C reaction resistance value [mΩ] | 85°C C expansion ratio [%] |
|---|---|---|---|---|---|---|---|
| | | Type | Concentration [mol/L] | Type | Amount added [part(s) by mass] | | |
| Ex.1-1 | EC/EMC | LiPF₆ | 1 | 3,6-dimethyl-3,4-dihydro-1,2,3-oxathiazin-4-one 2,2-dioxide | 1 | 143 | 132 |
| Ex.1-2 | | | | 6-methyl-3,4-dihydro-1,2,3-oxathiazin-4-one 2,2-dioxide lithium | 1 | 155 | 144 |
| Ex.1-3 | | | | 3-fluoro-6-methyl-3,4-dihydro-1,2,3-oxathiazin-4-one 2,2-dioxide | 1 | 160 | 136 |
| Ex.1-4 | | | | 5-fluoro-6-methyl-1,2,3-oxathiazin-4-one 2,2-dioxide lithium | 1 | 173 | 142 |
| Ex.1-5 | | | | 6-methyl-3,4-dihydro-1,2,3-oxathiazin-4-one 2,2-dioxide | 1 | 165 | 129 |
| Comp. Ex.1-1 | EC/EMC | LiPF₆ | 1 | none | | 201 | 233 |
| Comp. Ex.1-2 | | | | 1,3-propanesultone | 1 | 270 | 150 |
| Comp. Ex.1-3 | | | | ethylene glycol sulfuric ester | 1 | 163 | 265 |
| Comp. Ex.1-4 | | | | 2-methylisothiazolidine 1,1-dioxide | 1 | 221 | 182 |
| Comp. Ex.1-5 | | | | 2-methyl-3(2H)-isothiazolone 1,1-dioxide | 1 | 204 | 140 |

As shown in Table 1, in the case of Examples 1-1 to 1-5 each using a cyclic amide compound composed of an N-acylsulfonic ester, remarkable improvement in reaction resistance at a low temperature and gas generation at a high temperature was observed as compared with Comparative Example 1-1 using no cyclic amide compound. In those examples, further, compatibility between characteristics at a low temperature and characteristics at a high temperature couldbe improved by the use of a cyclic N-acylsulfonic ester amide compound though the compatibility could not be improved in Comparative Example 1-2 using 1,3-propanesultone, Comparative Example 1-3 using ethylene glycol sulfuric ester, Comparative Example 1-4 using 2-methylisothiazolidine 1,1-dioxide and Comparative Example 1-5 using 2-methyl-3(2H)-isothiazolone 1,1-dioxide.

### [Examples 2-1 to 2-8]

In Examples 2-1 to 2-8, batteries were prepared by the same method as in Example 1-1. The content of 3,6-dimethyl-3,4-dihydro-1,2,3-oxathiazin-4-one 2,2-dioxide was changed as shown in Table 2.

**[Table 2]**

| | Solvent | Electrolyte salt | | Additive | | 0°C reaction resistance value [mΩ] | 85°C expansion ratio [%] |
|---|---|---|---|---|---|---|---|
| | | Type | Concentration [mol/L] | Type | Amount added [part(s) by mass] | | |
| Ex. 2-1 | | | | 3,6-dimethyl-3,4-dihydro-1,2,3-oxathiazin-4-one 2,2-dioxide | 0.02 | 192 | 218 |
| Ex. 2-2 | | | | 3,6-dimethyl-3,4-dihydro-1,2,3-oxathiazin-4-one 2,2-dioxide | 0.05 | 163 | 180 |
| Ex. 2-3 | | | | 3,6-dimethyl-3,4-dihydro-1,2,3-oxathiazin-4-one 2,2-dioxide | 0.2 | 159 | 166 |
| Ex. 2-4 | EC/EMC | LiPF₆ | 1 | 3,6-dimethyl-3,4-dihydro-1,2,3-oxathiazin-4-one 2,2-dioxide | 0.5 | 144 | 145 |
| Ex. 2-5 | | | | 3,6-dimethyl-3,4-dihydro-1,2,3-oxathiazin-4-one 2,2-dioxide | 2 | 156 | 130 |
| Ex. 2-6 | | | | 3,6-dimethyl-3,4-dihydro-1,2,3-oxathiazin-4-one 2,2-dioxide | 5 | 166 | 129 |
| Ex. 2-7 | | | | 3,6-dimethyl-3,4-dihydro-1,2,3-oxathiazin-4-one 2,2-dioxide | 10 | 193 | 124 |
| Ex. 2-8 | | | | 3,6-dimethyl-3,4-dihydro-1,2,3-oxathiazin-4-one 2,2-dioxide | 15 | 260 | 122 |
| Comp. Ex. 1-1 | EC/EMC | LiPF₆ | 1 | none | | 201 | 233 |

| | | | | | | | |
|---|---|---|---|---|---|---|---|
| EC: ethylene carbonate EMC: ethyl methyl carbonate | | | | | | | |

As shown in Table 2, a tendency that as the content of 3,6-dimethyl-3,4-dihydro-1,2,3-oxathiazin-4-one 2,2-dioxide increased, the resistance value of the reaction resistance at a low temperature decreased, exhibited a minimum value and then rose was observed. Further, as the content of 3,6-dimethyl-3,4-dihydro-1,2,3-oxathiazin-4-one 2,2-dioxide increased, the expansion ratio in the high-temperature storage decreased. Therefore, according to Examples 2-2 to 2-7 in which the content of 3,6-dimethyl-3,4-dihydro-1,2,3-oxathiazin-4-one 2,2-dioxide was not less than 0.05 part by mass but not more than 10 parts by mass, the low-temperature characteristics and the high-temperature characteristics were both improved as compared with Comparative Example 1-1 containing no 3,6-dimethyl-3,4-dihydro-1,2,3-oxathiazin-4-one 2,2-dioxide.

### [Examples 3-1 to 3-3]

Batteries were prepared by the same method as in Example 1-1, except that the constitution of the electrolyte solution contained type 1 additives in table 3 instead of 3,6-dimethyl-3,4-dihydro-1,2,3-oxathiazin-4-one 2,2-dioxide and further contained 0.5 part by mass of 2-acryloyloxyethyl isocyanate in Example 3-1, 1,1-bis(acryloyloxymethyl)ethyl isocyanate in Example 3-2 and 2-methacryloyloxyethyl isocyanate in Example 3-3, respectively. The results of measurements of reaction resistance at a low temperature and high-temperature characteristics are set forth in Table 3.

### [Comparative Examples 3-1 to 3-3]

Batteries were prepared by the same method as in Comparative Example 1-1, except that the constitution of the electrolyte solution was changed by adding 0.5% by weight of 2-acryloyloxyethyl isocyanate in Comparative Example 3-1, by adding 0.5% by weight of 1,1-bis(acryloyloxymethyl)ethyl isocyanate in Comparative Example 3-2 and by adding 0.5 part by mass of 2-methacryloyloxyethyl isocyanate in Comparative Example 3-3. The results of measurements of reaction resistance at a low temperature and high-temperature characteristics are set forth in Table 3.

**[Table 3]**

| | Solvent | Electrolyte salt | | Additive | | 0°C reaction resistance value [mΩ] | 85°C expansion ratio [%] |
|---|---|---|---|---|---|---|---|
| | | Type | concentration [mol/L] | Type 1 | Amount added [part(s) by mass] | | |
| | | | | Type 2 | | | |
| Ex.1-1 | | | | 3,6-dimethyl-3,4-dihydro-1,2,3-oxathiazin-4-one 2,2-dioxide | 1 | 143 | 132 |
| | | | | none | | | |
| Ex. 3-1 | | | | 6-methyl-3,4-dihydro-1,2,3-oxathiazin-4-one 2,2-dioxide lithium | 1 | 150 | 108 |
| | EC/EMC | LiPF₆ | 1 | 2-acryloyloxyethyl isocyanate | 0.5 | | |
| Ex. 3-2 | | | | 3-fluoro-6-methyl-3,4-dihydro-1,2,3-oxathiazin-4-one 2,2-dioxide | 1 | 145 | 112 |
| | | | | 1,1-bis(acryloyloxymethyl)ethyl isocyanate | 0.5 | | |
| Ex. 3-3 | | | | 5-fluoro-6-methyl-1,2,3-oxathiazin-4-one 2,2-dioxide lithium | 1 | 162 | 124 |
| | | | | 2-methacryloyloxyethyl isocyanate | 0.5 | | |
| Comp. Ex. 3-1 | | | | 2-acryloyloxyethyl isocyanate | 0.5 | 205 | 145 |
| Comp. Ex. 3-2 | | | | 1,1-bis(acryloyloxymethyl)ethyl isocyanate | 0.5 | 195 | 159 |
| Comp. Ex. 3-3 | EC/EMC | LiPF₆ | 1 | 2-methacryloyloxyethyl isocyanate | 0.5 | 221 | 172 |
| Comp. Ex.1-1 | | | | none | | 201 | 233 |
| Comp. Ex.1-2 | | | | 1,3-propanesultone | 1 | 270 | 150 |
| Comp. Ex.1-3 | | | | ethylene glycol sulfuric ester | 1 | 163 | 265 |

| | | | | | | | |
|---|---|---|---|---|---|---|---|
| EC: ethylene carbonate EMC: ethyl methyl carbonate | | | | | | | |

As shown in Table 3, according to Examples 3-1 to 3-3 using 2-acryloyloxyethyl isocyanate, 1,1-bis(acryloyloxymethyl)ethyl isocyanate and 2-methacryloyloxyethyl isocyanate, respectively, together with type 1 additives instead of 3,6-dimethyl-3,4-dihydro-1,2,3-oxathiazin-4-one 2,2-dioxide, expansion of battery at a high temperature was further suppressed while maintaining low resistance at a low temperature, said low resistance being on the same level as that of Example 1-1 using none of the above compounds, and besides, the characteristics at a low temperature were remarkably improved as compared with Comparative Examples 3-1 to 3-3 using 2-acryloyloxyethyl isocyanate, 1,1-bis(acryloyloxymethyl)ethyl isocyanate and 2-methacryloyloxyethyl isocyanate, respectively, alone.

### [Examples 4-1 to 4-3]

Batteries were prepared by the same method as in Example 1-1, except that the constitution of the electrolyte solution contained type 1 additives in table 4 instead of 3,6-dimethyl-3,4-dihydro-1,2,3-oxathiazin-4-one 2,2-dioxide and further contained vinylene carbonate in Example 4-1, 4-fluoro-1,3-dioxolan-2-one in Example 4-2 and 4,5-difluoro-1,3-dioxolan-2-one in Example 4-3, respectively. The results of measurements of reaction resistance at a low temperature and high-temperature characteristics are set forth in Table 4.

### [Comparative Examples 4-1 to 4-3]

Batteries were prepared by the same method as in Comparative Example 1-1, except that the constitution of the electrolyte solution was changed by using vinylene carbonate in Comparative Example 4-1, by using 4-fluoro-1,3-dioxolan-2-one in Comparative Example 4-2 and by using 4, 5-difluoro-1, 3-dioxolan-2-one in Comparative Example 4-3. The results of measurements of reaction resistance at a low temperature and high-temperature characteristics are set forth in Table 4.

**[Table 4]**

| | Solvent | Electrolyte salt | | Additive | | 0°C reaction resistance value [mΩ] | 85°C expansion ratio [%] |
|---|---|---|---|---|---|---|---|
| | | Type | Concentration [mol/L] | Type 1 | Amount added [part(s) by mass] | | |
| | | | | Type 2 | | | |
| Ex.1-1 | | | | 3,6-dimethyl-3,4-dihydro-1,2,3-oxathiazin-4-one 2,2-dioxide | 1 | 143 | 132 |
| | | | | none | | | |
| Ex. 4-1 | | | | 6-methyl-3,4-dihydro-1,2,3-oxathiazin-4-one 2,2-dioxide | 1 | 155 | 135 |
| | EC/EMC | LiPF₆ | 1 | vinylene carbonate | 1 | | |
| Ex. 4-2 | | | | 3-fluoro-6-methyl-3,4-dihydro-1,2,3-oxathiazin-4-one 2,2-dioxide | 1 | 125 | 147 |
| | | | | 4-fluoro-1,3-dioxolan-2-one | 1 | | |
| Ex. 4-3 | | | | 5-fluoro-6-methyl-1,2,3-oxathiazin-4-one 2,2-dioxide | 1 | 159 | 156 |
| | | | | 4,5-difluoro-1,3-dioxolan-2-one | 1 | | |
| Comp. Ex. 4-1 | | | | vinylene carbonate | 1 | 230 | 189 |
| Comp. Ex. 4-2 | | | | 4-fluoro-1,3-dioxolan-2-one | 1 | 175 | 245 |
| Comp. Ex. 4-3 | EC/EMC | LiPF₆ | 1 | 4,5-difluoro-1,3-dioxolan-2-one | 1 | 210 | 255 |
| Comp. Ex.1-1 | | | | none | | 201 | 233 |
| Comp. Ex.1-2 | | | | 1,3-propanesultone | 1 | 270 | 150 |
| Comp. Ex.1-3 | | | | ethylene glycol sulfuric ester | 1 | 163 | 265 |

| | | | | | | | |
|---|---|---|---|---|---|---|---|
| EC: ethylene carbonate EMC: ethyl methyl carbonate | | | | | | | |

As shown in Table 4, according to Examples 4-1 to 4-3 using vinylene carbonate, 4-fluoro-1,3-dioxolan-2-one and 4,5-difluoro-1,3-dioxolan-2-one, respectively, a rise of reaction resistance at a low temperature and battery expansion at a high temperature could be suppressed to the same level as that in Example 1-1 using none of the above compounds. Moreover, even in comparison with Comparative Examples 4-1 to 4-3 using vinylene carbonate, 4-fluoro-1,3-dioxolan-2-one and 4,5-difluoro-1,3-dioxolan-2-one, respectively, alone, a rise of reaction resistance at a low temperature and expansion of battery at a high temperature were both suppressed.

### [Examples 5-1 to 5-3]

Batteries were prepared by the same method as in Example 1-1, except that the constitution of the electrolyte solution contained type 1 additives in table 5 instead of 3,6-dimethyl-3,4-dihydro-1,2,3-oxathiazin-4-one 2,2-dioxide and further contained lithium fluorododecaborate in Example 5-1, lithium bis(oxalate)borate in Example 5-2 and lithium tetrafluoroborate in Example 5-3, respectively. The results of measurements of reaction resistance at a low temperature and high-temperature characteristics are set forth in Table 5.

### [Comparative Examples 5-1 to 5-3]

Batteries were prepared by the same method as in Comparative Example 1-1, except that the constitution of the electrolyte solution was changed by using lithium fluorododecaborate in Comparative Example 5-1, by using lithium bis (oxalate)borate in Comparative Example 5-2 and by using lithium tetrafluoroborate in Comparative Example 5-3. The results of measurements of reaction resistance at a low temperature and high-temperature characteristics are set forth in Table 5.

**[Table 5]**

| | Solvent | Electrolyte salt | | Additive | | 0°C reaction resistance value [mΩ] | 85°C expansion ratio [%] |
|---|---|---|---|---|---|---|---|
| | | Type | Concentration [mol/L] | Type 1 | Amount added [part(s) by mass] | | |
| | | | | Type 2 | | | |
| Ex. 1-1 | | | | 3,6-dimethyl-3,4-dihydro-1,2,3-oxathiazin-4-one 2,2-dioxide | 1 | 143 | 132 |
| | | | | none | | | |
| Ex. 5-1 | | | | 6-methyl-3,4-dihydro-1,2,3-oxathiazin-4-one 2,2-dioxide lithium | 1 | 148 | 127 |
| | EC/EMC | LiPF₆ | 1 | lithium fluorododecaborate | 1 | | |
| Ex. 5-2 | | | | 3-fluoro-6-methyl-3,4-dihydro-1,2,3-oxathiazin-4-one 2,2-dioxide | 1 | 162 | 153 |
| | | | | lithium bis(oxalate)borate | 1 | | |
| Ex. 5-3 | | | | 5-fluoro-6-methyl-1,2,3-oxathiazin-4-one 2,2-dioxide lithium | 1 | 128 | 127 |
| | | | | lithium tetrafluoroborate | 1 | | |
| Comp. Ex. 5-1 | | | | lithium fluorododecaborate | 1 | 208 | 222 |
| Comp. Ex. 5-2 | | | | lithium bis(oxalate)borate | 1 | 215 | 245 |
| Comp. Ex. 5-3 | EC/EMC | LiPF₆ | 1 | lithium tetrafluoroborate | 1 | 161 | 177 |
| Comp. Ex. 1-1 | | | | none | | 201 | 233 |
| Comp. Ex. 1-2 | | | | 1,3-propanesultone | 1 | 270 | 150 |
| Comp. Ex. 1-3 | | | | ethylene glycol sulfuric ester | 1 | 163 | 265 |

| | | | | | | | |
|---|---|---|---|---|---|---|---|
| EC: ethylene carbonate EMC: ethyl methyl carbonate | | | | | | | |

As shown in Table 5, according to Examples 5-1 to 5-3 using lithium bis (oxalate) borate and lithium tetrafluoroborate, a rise of reaction resistance at a low temperature and expansion of battery at a high temperature were both suppressed similarly to Example 1-1. Moreover, even in comparison with Comparative Examples 5-1 to 5-3 using lithium bis(oxalate)borate and lithium tetrafluoroborate, respectively, alone, a rise of reaction resistance at a low temperature and expansion of battery at a high temperature were both suppressed.

As is evident from Table 1 to Table 5, it can be understood that according to the battery of the present invention, a rise of reaction resistance at a low temperature is suppressed, and besides, the amount of a gas generated by decomposition of the electrolyte solution is remarkably suppressed even when the battery is stored at a high temperature.

## Claims

1. A nonaqueous electrolyte solution for a secondary battery, comprising an electrolyte, a solvent and an additive, wherein the additive contains a compound represented by the following formula (I) : 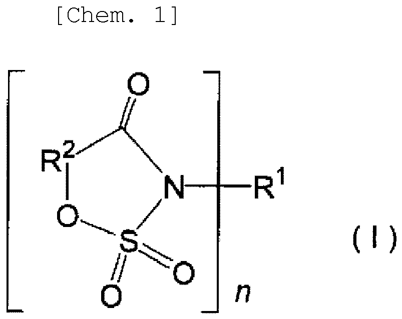 wherein n represents an integer of 1 to 4,
in the case of n=1, R¹ represents a halogen atom, a hydrogen atom, an alkali metal atom, a monovalent transition metal atom, an alkyl group of 1 to 6 carbon atoms, an alkenyl group of 2 to 6 carbon atoms, an alkynyl group of 2 to 6 carbon atoms, a cycloalkyl group of 3 to 12 carbon atoms or an aryl group of 6 to 12 carbon atoms, the alkyl group of 1 to 6 carbon atoms may be one substituted by a halogen atom, an alkyl group or an alkenyl group, and the alkenyl group of 2 to 6 carbon atoms, the alkynyl group of 2 to 6 carbon atoms, the cycloalkyl group of 3 to 12 carbon atoms and the aryl group of 6 to 12 carbon atoms may be those substituted by a halogen atom or an alkyl group,
in the case of n=2, R¹ represents an alkaline earth metal atom, a divalent transition metal atom, a divalent typical metal atom, an alkylene group of 1 to 6 carbon atoms, an alkenylene group of 2 to 6 carbon atoms, a cycloalkyl ring having 3 to 12 carbon atoms and 2 connectors or an aryl ring having 6 to 12 carbon atoms and2 connectors, the alkylene group of 1 to 6 carbon atoms may be one substituted by a halogen atom, an alkyl group or an alkenyl group, and the alkenylene group of 2 to 6 carbon atoms, the cycloalkyl ring having 3 to 12 carbon atoms and 2 connectors and the aryl ring having 6 to 12 carbon atoms and 2 connectors may be those substituted by a halogen atom or an alkyl group,
in the case of n=3, R¹ represents a trivalent transition metal atom and a trivalent typical metal atom,
in the case of n=4, R¹ represents a tetravalent transition metal atom and a tetravalent typical metal atom,
R² represents an alkylene group of 1 to 6 carbon atoms or an alkenylene group of 2 to 6 carbon atoms, the alkylene group of 1 to 6 carbon atoms may be one substituted by a halogen atom, an alkyl group or an alkenyl group, and the alkenylene group of 2 to 6 carbon atoms may be one substituted by a halogen atom or an alkyl group.

2. The nonaqueous electrolyte solution for a secondary battery as claimed in claim 1, wherein the additive contains the compound of the formula (I) wherein n is 1 or 2,
in the case of n=1, R¹ is selected from a fluorine atom, a hydrogen atom, an alkali metal atom, and a methyl group, an ethyl group, a propyl group, a vinyl group, an allyl group, a propargyl group, a tert-butyl group and a phenyl group which may be each substituted by a fluorine atom, in the case of n=2, R¹ is at least one kind selected from an alkaline earth metal atom, a zinc atom, an ethylene group, a vinylene group, a n-propylene group and a phenylene group, and
R² is at least one kind selected from an alkylene group of 1 to 2 carbon atoms which may be substituted by a fluorine atom or an alkyl group and an alkenylene group of 2 to 3 carbon atoms which may be substituted by a fluorine atom or an alkyl group.

3. The nonaqueous electrolyte solution for a secondary battery as claimed in claim 1 or 2, wherein the compound represented by the formula (I) is at least one kind selected from the group consisting of 6-methyl-3,4-dihydro-1,2,3-oxathiazin-4-one 2,2-dioxide lithium, 6-methyl-3,4-dihydro-1,2,3-oxathiazin-4-one 2,2-dioxide, 3,6-dimethyl-3,4-dihydro-1,2,3-oxathiazin-4-one 2,2-dioxide, and 5-fluoro-6-methyl-1,2,3-oxathiazin-4-one 2,2-dioxide lithium.

4. The nonaqueous electrolyte solution for a secondary battery as claimed in any one of claims 1 to 3, wherein the content of the compound represented by the formula (I) is 0.05 to 10 parts by mass based on 100 parts by mass of the total of the solvent.

5. The nonaqueous electrolyte solution for a secondary battery as claimed in claim 1, which further comprises, as an additive, a compound represented by the following formula (II): 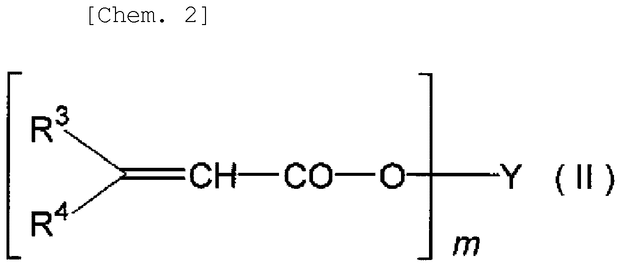 wherein R³ and R⁴ are each independently a hydrogen atom, a methyl group or an amino group, m is 1 to 4, when m is 1, Y is a hydrogen atom or a monovalent organic group, when m is 2, Y is a divalent organic group, when m is 3, Y is a trivalent organic group, and when m is 4, Y is a tetravalent organic group.

6. The nonaqueous electrolyte solution for a secondary battery as claimed in claim 5, wherein when m is 1 or 2 and Y is monovalent in the compound represented by the formula (II), Y is an alkyl group of 1 to 6 carbon atoms or has a structure wherein one hydrogen atom in the alkyl group has been replaced with an isocyanato group, and when m is 1 or 2 and Y is divalent in the above compound, Y is an alkylene group of 1 to 6 carbon atoms or has a structure wherein one hydrogen atom in the alkylene group has been replaced with an isocyanato group.

7. The nonaqueous electrolyte solution for a secondary battery as claimed in claim 5, wherein the compound represented by the formula (II) is at least one kind selected from the group consisting of 1,1-bis(acryloyloxymethyl)ethyl isocyanate, N,N'-bis(acryloyloxyethyl)urea, 2,2-bis(acryloyloxymethyl)ethyl isocyanate diethylene oxide, 2,2-bis(acryloyloxymethyl)ethyl isocyanate triethylene oxide, tetrakis(acryloyloxymethyl)urea, 2-acryloyloxyethyl isocyanate, methyl crotonate, ethyl crotonate, methyl aminocrotonate, ethyl aminocrotonate and vinyl crotonate.

8. The nonaqueous electrolyte solution for a secondary battery as claimed in any one of claims 5 to 7, wherein the content of the compound **characterized by** formula (II) is 0.05 to 10 parts by mass based on 100 parts by mass of the total of the solvent.

9. The nonaqueous electrolyte solution for a secondary battery as claimed in claim 1, wherein the electrolyte is at least one kind selected from lithium hexafluorophosphate and lithium tetrafluoroborate.

10. The nonaqueous electrolyte solution for a secondary battery as claimed in claim 1, which further comprises a cyclic carbonic ester of an unsaturated compound.

11. The nonaqueous electrolyte solution for a secondary battery as claimed in claim 1, which further comprises, as an additive, at least one kind selected from methyl difluoroacetate, 1,3-propanesultone, 1,4-butanesultone, 4-fluoro-1,3-dioxolan-2-one, 4,5-difluoro-1,3-dioxolan-2-one, lithium fluorododecaborate represented by the formula Li₂B₁₂F_{X}Z_{12-X} (wherein X is an integer of 8 to 12, and Z is H, Cl or Br), lithium bis(oxalate)borate, lithium difluorooxalatoborate, lithium bis(trifluoromethane sulfonyl)imide, lithium bis(fluorosulfonyl)imide, cyclohexylbenzene, tert-pentylbenzene, succinonitrile and adiponitrile.

12. The nonaqueous electrolyte solution for a secondary battery as claimed in claim 1, wherein the solvent contains at least one kind selected from the group consisting of cyclic carbonates and chain carbonates.

13. A nonaqueous electrolyte secondary battery comprising a positive electrode, a negative electrode and the nonaqueous electrolyte solution for a secondary battery as claimed in any one of claims 1 to 12.
